# FASCICULE DE BREVET EUROPEEN

(11) **EP 1 199 157 B1**
(45) Date de publication et mention de la délivrance du brevet: **09.12.2009**
(21) Numéro de dépôt: 99929336.8
(22) Date de dépôt: 15.07.1999
(51) Int. Cl.: B32B 21/04, B32B 21/08, B32B 21/14, B32B 27/04, B32B 27/20, B32B 27/30, B32B 27/42, E04B 2/92, E04C 2/10, E04C 2/24

(54) **PANNEAU DE TYPE SANDWICH**
SANDWICHPLATTE
SANDWICH TYPE PANEL

(43) Date de publication de la demande: 24.04.2002
(73) Titulaire: Prodema, S.A., 20250 Legorreta (ES)
(72) Inventeur: AYESTARAN ALZUALDE, Javier, E-20250 Legorreta (ES)
(74) Mandataire: Elzaburu Marquez, Alberto
(86) Numéro de dépôt international: PCT/ES1999/000226
(87) Numéro de publication internationale: WO 2001/005587

(56) Documents cités:
- DE-A- 19 503 776
- GB-A- 2 066 156
- GB-A- 2 307 882

## Description

Les planches du type sandwich sont déjà bien connues pour des utilisations extérieures, dans lesquelles interviennent différentes couches de bois et de matériel cellulosique avec des imprégnations, qui sont ensuite soumises à un pressage pour donner naissance à une planche compacte.

Ces planches connues présentent entre autres inconvénients:
- Contamination physicochimique des différentes couches de la planche imprégénées de différentes résines.
- Faible adaptabilité chromatique aux exigences des différents clients.
- Faible adaptabilité de la finition superficielle dans la présentation finale de la planche.
- Faible résistance aux conditions physicochimiques environnementales, par exemple aux rayons ultraviolets.

Dans ces planches, on utilise ordinairement comme âme un paquet de lames de cellulose imprégnée de résine phénolique sur laquelle on place, de chaque côté, une plaque mince, par exemple de 0,5 mm., de bois également imprégnée de résine phénolique. La pigmentation la plus grossière et la plus sombre de l'âme passe aisément à la plaque de bois, en la contaminant et arrivant à en modifier la présence extérieure.

Pour l'éviter, on dispose entre l'âme et la plaque de bois un film de cellulose imprégné de mélamine qui joue le rôle de barrière physicochimique.

La durabilité, la fonctionnalité et la présence de ces planches dépend du nombre de couches des différents matériaux utilisés, du type de résine dont on les imprègne, aussi les combinaisons sont-elles infinies et seules quelques-unes d'entre elles donnent des résultats pratiques, comme la combinaison qui fait l'objet de l'invention.

La résistance superficielle aux rayonnements solaires, notamment aux rayons ultraviolets (rayons UVA) est obtenue en présentant à l'extérieur du sandwich un film de nature acrylique, mais dans la pratique de laboratoire, le demandeur a observé qu'une planche-sandwich, simplement avec un film acrylique à l'extérieur, ne surmonte pas l'épreuve d'immersion en ébullition pendant deux heures, avec production de bulles et de déformations.

Le demandeur a également surmonté cet obstacle en transformant le film acrylique en un film multicouche composé d'un film transparent/translucide, de nature acrylique et un film de cellulose absorbant qui sera également transparent/translucide à la suite de l'imprégnation d'une couche de résine de la même nature que celle utilisée pour imprégner la couche précédente du sandwich, les deux films étant unis par un adhésif.

Le document GB-A-2 307 882 décrit un panneau type sandwich qui comprend deux feuilles laminées traitées avec une résine phénolique et une couche intermédiaire consistant en feuilles absorbantes de cellulose imprégnées de résine phénolique. Comme option, il peut y avoir une pellicule intérieure de cellulose résistante à l'UV imprégnée de résine acrylique.

Pour mieux comprendre l'objet de la présente invention, on représente sur les plans une forme préférentielle de réalisation pratique, susceptible de changements accessoires qui n'en dénaturent pas le fondement.
La figure 1 est une section schématique avec les différentes couches qui constituent la planche objet de l'invention.
La figure 2 est une section schématique de la couche-film acrylique (5).

On décrit ci-dessous un exemple de réalisation pratique, non limitative, de la présente invention.

La planche dispose d'une face (C1) et d'une "contre-face" (C2).

Dans l'invention, toute planche sandwich à usage extérieur devra comporter à l'extérieur un film extérieur (5) de nature acrylique.

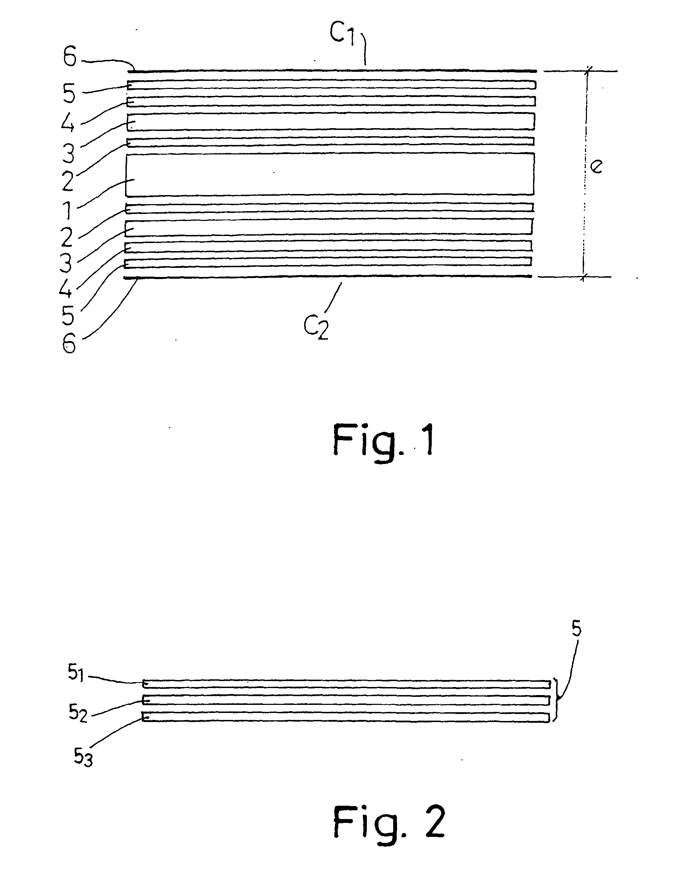

Le dernier film ou film extérieur (5) -figure 2- est un film multicouche transparent / translucide (parce que ses composants sont transparents/translucides) composé d'un film extérieur (51) de nature acrylique, un adhésif (52), par exemple à base de polyuréthanne, à base acrylique, polychloroprènes, etc., et un film de cellulose (53) absorbant imprégné d'une résine de la même nature que la résine utilisée pour imprégner la couche immédiatement inférieure. Dans le cas de la figure 1, ce serait le paquet de tons (4).

Par exemple, si dans un paquet de tons (4), on a utilisé comme imprégnation une résine phénolique, le film de cellulose (53) absorbant sera imprégné de résine phénolique.

En principe, la planche est symétrique, c'est pourquoi on ne décrira que l'un des côtés, mais il entre dans l'objet de l'invention qu'un élément ne soit pas disposé, car inutile, par exemple sur la "contre-face" (C2).

Sur l'âme (1), on met en place une plaque de bois (3) de faible épaisseur et imprégnée de résine phénolique, par exemple de de 0'8 mm.

Si cette disposition était laissée telle quelle, elle serait à l'origine d'un échange physicochimique entre la plaque de bois (3) et l'âme (1), par exemple des pigments de l'âme (1) au bois (3), ce qui peut nuire à la nature du bois, voire provoquer un changement chromatique dans sa tonalité et des taches, ce qui occasionnerait son échec, car sa surface peut être vue de l'extérieur.

Sur la plaque de bois (3), on place un paquet de tons (4) constitué de films qui, conformément aux besoins, peut comporter de un à trois films de cellulose, chacun d'entre eux imprégné de l'une des résines suivantes: mélamine, mélamine-acrylique, phénol ou mélanime-phénol. Normalement, chacun des films de ce paquet (4) est transparent ou translucide, et peut avoir des charges pigmentaires et de silice, grâce à quoi on obtiendra différentes tonalités et une résistance à l'abrasion.

Le dernier film (5) acrylique transparent permet une plus grande sécurité dans les propriétés de résistance physicochimique aux conditions environnementales, par exemple les rayons ultraviolets.

Étant donné que la présence superficielle de ces planches est également très importante, on dispose, lors du pressage de la planche, sur le dernier film (5), un film démoulant (6) qui n'est pas incorporé à la structure de la planche, mais lui donne la finition superficielle. Le film démoulant (6) peut être différent pour la face (C1) et la contre-face (C2).

Le film démoulant (6) peut être choisi entre un siliconé mat, un polypropylène ou un siliconé brillant, pour obtenir respectivement une finition mate, un satiné ou un brillant cristal.

La planche finale est compacte et d'environ 10 mm. d'épaisseur (e).

Il est entendu que le film multicouche ayant une nature acrylique (5) peut être utilisé avec la planche décrite pour la figure 1 ou d'autres planches sandwich, par exemple, qui ne se composent que d'une âme (1) et de plaques de bois (3), ou d'une âme (1) et de paquets de tons (4).

### Exemple 1 (non conforme à l'invention)

Comme âme (1), on dispose d'un "kralf" phénolique 180/290 g/m² et la lame (2) correspondante de mélamine.

Les plaques de bois (3) ont une épaisseur de 0'75 + 0'80 mm.

Le paquet de tons (4) se compose d'un film intérieur de cellulose imprégné de résine phénolique et ayant une tonalité foncée, et un film extérieur de cellulose imprégné de mélamine et avec une charge de silice.

Le film extérieur (5) transparent acrylique ayant une transmittance < 2% à une longueur d'onde 290 ÷ 370 mm. avec une densité de 1'13 g/cm³

Pour le démoulage on utilise pour les deux faces (C1), (C2), un film siliconé brillant cristal.

Le résultat en est une planche ayant les dimensions approximatives de 2440 x 1220 x 8 mm. avec les deux faces identiques, lisses , avec brillant et tonalité foncée.

### Exemple II (non conforme à l'invention)

Comme âme (1), on dispose d'un kralf phénolique 180/290 g/m² et la lame (2) correspondante de mélamine.

Les plaques de bois (3) ont une épaisseur de 0'75 ÷ 0'80 mm.

Le paquets de tons (4) se compose d'un film intérieur de cellulose imprégné de résine phénolique et ayant une tonalité claire, et d'un film extérieur de cellulose imprégné de mélamine et ayant une charge de silice.

Le film extérieur (5) transparent acrylique ayant une transmittance < 2 % avec une longueur d'onde 290 ÷ 370 mm., et une densité de 1'13 g/cm³.

Pour le démoulage, on utilise, pour les deux faces (C1), (C2), un film de polypropylène.

Le résultat en est une planche ayant les dimensions approximatives de 2440 x 1220 x 10 mm., avec les deux faces identiques, lisses, satinées et ayant une tonalité claire.

## Revendications

1. Planche type sandwich, ayant une face et une "contre-face", de celles qui comprennent plusieurs couches successives, **se caractérisant par le fait que** l'extérieur présente comme face et/ou contre-face un film transparent/translucide multicouche qui comprend, de l'extérieur vers l'intérieur de:
a).- un film acrylique (5₁) transparent
b).- un adhésif (5₃) qui adhère le films acrylique à
a).- un film de cellulose (5₃) absorbant imprégné d'une résine de la même nature que la résine utilisée pour imprégner la couche (3) (4)qui suit immédiatement dans le sandwich.

2. Planche type sandwich, suivant la revendication précédente, **se caractérisant par le fait qu'**elle dispose en guise de couches et de façon successive, du centre à la face et la contre-face de:
a).- une âme constituée par des paquets de feuilles absorbantes de cellulose imprégnées de résine phénolique;
b).- un film de cellulose imprégné de mélamine;
c).- une plaque de bois lamifié traité avec une résine phénolique;
d).- un paquet de tons d'un à trois films translucides et/ou transparents, de cellulose, chacun d'entre eux étant imprégné d'une résine choisie entre mélamine, mélamina-acrylique, phénolique, mélamine-phénolique;
e).- le film transparent/translucide multicoupe et ayant une finition superficielle obtenue au moyen d'un film démoulant lors du pressage de la planche.

3. Planche type sandwich, suivant la deuxième revendication, **se caractérisant par le fait que** le film démoulant est choisi entre un siliconé mat, un polypropylène ou un siliconé brillant.

4. Planche type sandwich, suivant la deuxième revendication, **se caractérisant par le fait qu'**au moins un des films du paquet de tons comporte une charge de silice.

5. Planche type sandwich, suivant la deuxième revendication, **se caractérisant par le fait qu'**au moins un des films du paquet de tons comporte une charge de pigmentation.

## Claims

1. Sandwich-type board, having a front face and a back face, of the type which comprises a plurality of successive layers, **characterised in that** the exterior has as front face and/or back face a multi-layer transparent/translucent film, which from the exterior towards the interior comprises:
a) a transparent acrylic film (5₁),
b) an adhesive (5₂) which adheres the acrylic film to
c) an absorbent cellulose film (5₃) impregnated with a resin of the same nature as the resin used to impregnate the layer (3) (4) which follows immediately in the sandwich.

2. Sandwich-type board, as claimed in the preceding claim, **characterised in that** from the centre to the front face and the back face it has in the form of successive layers:
a) a core consisting of packs of absorbent cellulose sheets impregnated with phenolic resin;
b) a cellulose film impregnated with melamine;
c) a laminated wood panel treated with a phenolic resin;
d) a pack of hues of one to three translucent and/or transparent films of cellulose, each of them being impregnated with a resin chosen from amongst melamine, melamine-acrylic, phenolic, melamine-phenolic resin;
e) the multi-layer transparent/translucent film having a surface finish obtained by means of a demoulding film during the pressing of the board.

3. Sandwich-type board as claimed in Claim 2, **characterised in that** the demoulding film is chosen from amongst a matt silicone, polypropylene or a gloss silicone.

4. Sandwich-type board as claimed in Claim 2, **characterised in that** at least one of the films of the pack of hues includes a silica extender.

5. Sandwich-type board as claimed in Claim 2, **characterised in that** at least one of the films of the pack of hues has a pigmentation extender.

## Patentansprüche

1. Sandwich-Platte mit einer Fläche und einer "Gegenfläche" und aufweisend mehrere aufeinanderfolgende Schichten, **dadurch gekennzeichnet, daß** die Außenseite als Fläche und/oder Gegenfläche eine transparente/transluzente mehrschichtige Anordnung aufweist, die von außen nach innen aufweist:
a) eine transparente Acrylschicht (5₁)
b) einen Klebstoff (5₂), der die Acrylschicht verbindet mit
c) einer absorbierenden Zelluloseschicht (5₃), die mit einem Harz der gleichen Art imprägniert ist, wie das Harz, das verwendet wird, um die in dem Sandwich unmittelbar angrenzende Schicht (3) (4) zu imprägnieren.

2. Sandwich-Platte nach dem vorausgehenden Anspruch, **dadurch gekennzeichnet, daß** sie als Schichten der Reihe nach von der Mitte zur Fläche und zur Gegenfläche aufweist:
a) eine Seele, bestehend aus einem Satz von absorbierenden Zelluloseplatten, die mit einem Phenolharz imprägniert sind;
b) eine mit Melamin imprägnierte Zelluloseschicht;
c) eine mit einem Phenolharz behandelte laminierte Holzplatte;
d) einen Farbtonsatz aus einer bis drei transluzenten und/oder transparenten Zelluloseschichten, von denen jede mit einem Harz, ausgewählt aus Melamin, Melaminacryl, Phenol, Melaminphenol, imprägniert ist;
e) die transparente/transluzente mehrschichtige Anordnung mit einer Oberflächenbeschaffenheit, die mit Hilfe einer entformenden Schicht beim Pressen der Platte erzielt wird.

3. Sandwich-Platte nach Anspruch 2, **dadurch gekennzeichnet, daß** die entformende Schicht ausgewählt ist aus einem matten Silikon, einem Polypropylen oder einem glänzenden Silikon.

4. Sandwich-Platte nach Anspruch 2, **dadurch gekennzeichnet, daß** mindestens eine der Schichten des Farbtonsatzes ein Füllmittel aus Kieselerde aufweist.

5. Sandwich-Platte nach Anspruch 2, **dadurch gekennzeichnet, daß** mindestens eine der Schichten des Farbtonsatzes ein Füllmittel aus Pigment aufweist.
